Europäisches Patentamt

European Patent Office

Office européen des brevets

(11) Publication number: **0 451 897 A2**

# EUROPEAN PATENT APPLICATION

(21) Application number: **91200699.6**

(22) Date of filing: **26.03.91**

(51) Int. Cl.⁵: **H04L 29/06**

(30) Priority: **09.04.90 US 506398**

(43) Date of publication of application:
**16.10.91 Bulletin 91/42**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **Smith, Patrick J.**
**1107 11th Street Northeast**
**Auburn, WA 98002(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Apparatus and method for providing an adaptable interface between computers.**

(57) A system for interfacing an aircraft flight management computer (FMC) with an airline host computer via an Aircraft Communication and Reporting System (ACARS) and a service provider ground network uses a first table which contains data for converting between an ACARS message format and an FMC processing format. Each ACARS message includes an identifier portion and a data portion. Each entry in the first table contains (i) data for converting the data portion of the message between ACARS message format and FMC processing format, and (ii) an identifying number. The system also includes a second table (loadable by the end user) which contains selected message identifiers followed by appropriate identifying numbers for referencing the conversion data in the first table. In order to convert between ACARS message format and FMC processing format, the identifier portion of the ACARS message is looked up in the second table to obtain the associated identifying number(s). Then by locating the identifying number(s) in the first table, the proper data for performing the conversion is retrieved. This permits the end user to make changes to the FMC/ACARS interface, such as changes to message format and message identifiers, by changing only the loadable table. The system also includes loadable tables (i) for providing display prompt information to the pilot for initiating downlinks, and (ii) for automatically initiating a downlink upon the occurrence of a predetermined event.

Fig.1

## Technical Field

The present invention relates to a system for transmitting and receiving data between two or more computers, and more particularly to apparatus and method for transmitting and receiving data between an aircraft flight management computer and a ground based airline host computer.

## Background of the Invention

A significant number of airline aircraft have the capability of transmitting (downlinking) and receiving (uplinking) digital data from an airline central computer via service provider ground stations and an Aircraft Communications Addressing and Reporting System (ACARS). ACARS is presently governed by an ARINC 724B specification.

This system has been used conventionally to communicate information such as updated airport arrival times and aircraft maintenance problems to airline ground units. This was accomplished by an aircraft ACARS Management Unit which communicated with a network of ground stations utilizing a VHF transceiver onboard the aircraft. The Management Unit was responsible for handling communications over the VHF link between the ground station and various computer systems onboard the aircraft.

A number of airline aircraft have onboard flight management computers (FMC) which provide flight plan management capabilities. These capabilities include entry of a complete flight plan by means of a navigation data base, entry of performance data for the flight plan, and lateral and vertical profile guidance data for the flight plan. One of the computer systems with which the Management Unit communicates with is the FMC.

Conventionally, uplinks have provided data relating to flight plan, aircraft performance, wind, and takeoff for direct entry into the FMC. Uplinks also have requested the FMC to downlink information, such as aircraft position reports, to the airline host computer via a ground station. Downlinks have provided the airline host computer with internal FMC data such as estimated time of arrival to destination, aircraft position, and winds aloft. In addition, downlinks have requested that the airline host computer send up information, such as wind data, flight plan data and performance data, to the FMC.

Conventionally, the interface between the FMC and the airline host computer has been "hardcoded" in a format specific for the designated airline end user. This has led to several problems. For one, FMC/ACARS uplink and downlink message requirements as well as parameter content and FMC/ACARS downlink prompt and trigger conditions have differed between airlines. In addition, requirements under the governing ARINC 724B document as well as end user requirements under FMC/ACARS have been subject to change. In the past responding to these changes has required expensive and time consuming modifications.

## Summary of the Invention

The present invention overcomes the aforementioned deficiencies of the conventional FMC/ACARS interface by providing loadable tables which contain data for converting ACARS messages between a format for transmission to a host computer and a format for use by the Flight Management Computer.

More specifically, the present invention includes means, such as a VHF transceiver, for transmitting an information message to, and receiving an information message from, a ground station. The information message is in a format which includes an identifier portion and a data portion. In addition, there are means, such as a flight management computer, for storing, retrieving and processing data which is in a format specific to the flight management computer. Also provided are means for storing a first table, such as an uplink item number table, which contains information for converting the data portion of the information message between the information message format (ACARS format) and the flight management computer processing format.

Also provided are means for storing a second table containing a list of message identifiers (such as IMI's and IEI's) and conversion data identifiers (such as IMI/IEI item numbers). In addition, there are means for reading the second table, in response to the identifier portion (IMI/IEI) of the information message, to determine the conversion data identifier (item number) that is associated with the identifier portion of the information message. Furthermore, there are means for reading the first table and for retrieving the conversion data from the first table that is associated with the conversion data identifier (item number) that was read from the second table. The retrieved conversion data is used to convert the data portion of the information message between the information message format and the flight management computer format.

## Brief Description of the Drawings

These and other features of the present invention will be described in further detail in the following detailed description by reference to the attached drawings, in which:

FIG. 1 is a simplified block diagram of an FMC/ACARS data transmission system of the present invention;
FIG. 2 is front view of a conventional Multiple Control and Display Unit (MCDU);
FIG. 3 is a representation of an exemplary Uplink Item Number Table;
FIG. 4 is a representation of an exemplary Uplink IMI/IEI Definition Table;
FIG. 5 is a representation of an exemplary Downlink Item Number Table;
FIG. 6 is a representation of an exemplary Downlink IMI/IEI Definition Table;
FIG. 7 is a representation of an exemplary Trigger Definition Table;
FIG. 8 is a representation of an exemplary Prompt Definition Table;
FIG. 9 is a representation of an exemplary Prompt Display Condition Table;
FIG. 10 is a simplified block diagram of an exemplary FMC/MU interface connector;
FIG. 11 is a flowchart which describes the processing of an uplink message;
FIG. 12 is a flowchart which further describes the processing of an uplink message;
FIG. 13 is a flowchart which describes the processing of a dcwnlink message;
FIG. 14 is a flowchart which describes the processing of a downlink message initiated by a display prompt at the MCDU; and
FIG. 15 is a flowchart which describes the processing of a downlink message initiated by an enabled trigger.

Detailed Description

In an exemplary embodiment, the present invention will be described as apparatus and methods for interfacing an aircraft flight management computer with an airline host computer by utilizing an onboard ACARS Management Unit, onboard ACARS transceiver and ground communication stations. More specifically, the present invention pertains to requirements for interpreting and constructing ACARS messages for communication between the flight management computer and the host computer. It should be appreciated however, that the scope of the present invention is not limited to the following exemplary embodiment.

Before proceeding with a description of the present invention, a further description of the conventional system for uplinking and downlinking data will be provided. Conventionally, the Management Unit communicated with the various data units onboard the aircraft (including the FMC) via a data bus network. The information transmitted between the aircraft and the airline host computer was in a section of the ACARS message referred to as the "free text field". There were two designators that identified the data contained in the field. One designator was an IMI (imbedded message identifier) which notified the FMC (with regard to uplinks) or the airline host computer (with regard to downlinks), as to the type of data (e.g., flight planning data, wind data, etc.) that was being transmitted. The other type of designator was an IEI (imbedded element identifier) which further identified the data located within each IMI. More specifically, an IEI consisted of a solidus (/) followed by a two-character code. For example, the uplink IEI "/CI020" notified the FMC that data pertaining to Cost Index (CI) was present in the message. The IMI's and IEI's available for use by the FMC/ACARS interface are set forth in the latest ARINC 724 document which is published by the Aeronautical Radio, Inc. of Annapolis, Md.

With regard to uplink processing, the Management Unit's responsibility was to route messages received from the airline host computer to various units on board the aircraft. It did this by identifying uplink message addresses and routing the data accordingly. The FMC had the responsibility for decoding the free text portion of the messages routed to it from the Management Unit and storing the data at a selected location in FMC memory.

Inside the FMC were a number of processing routines, each of which was dedicated to processing a separate IMI/IEI. In this manner, when the FMC identified the uplink, the corresponding processing routine was retrieved which identified the data, formatted the data into the proper code, and then stored the data at a selected location in FMC memory. In the event it was necessary to add a new IMI or IEI or to change the IMI/IEI, the FMC was removed and returned to the vendor for modification.

With regard to downlinks, the Management Unit's responsibility was to route messages from the various onboard computers to the ground station (where the messages were routed to the airline's host computer). It did this by receiving downlink data from the onboard computers and sending the data, via the VHF transceiver, to the ground station. The FMC had the responsibility for first determining when a downlink was to occur, then constructing a properly formatted downlink message, and routing the downlink message to the Management Unit.

When the FMC determined that a downlink was to occur (either through pilot selection of a hardcoded CDU prompt or by hardcoded event logic triggering), it would invoke a processing routine dedicated to constructing the associated downlink. The processing routine then would extract the needed FMC data, convert the data from internal FMC format to information message format and insert the appropriate IMI's/IEI's. The downlink message would then be routed to the MU. In the event new downlink conditions or new downlink message definitions were needed, the FMC was removed and returned to the vendor for modification.

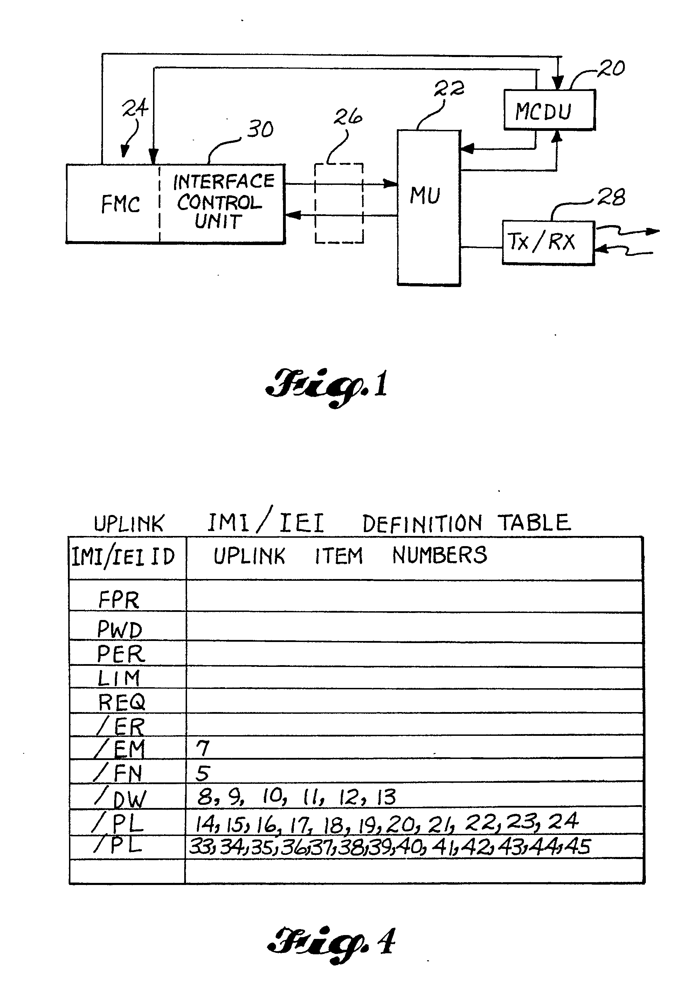

Having described the conventional system, attention now will be turned to FIG. 1 where there is shown a simplified block diagram of the operating environment of an exemplary embodiment of the present invention. The system includes a conventional multiple control and display unit (MCDU) 20 which is located in the aircraft cockpit. When the pilot desires to downlink data between the aircraft and the ground, the appropriate instructions are entered manually at MCDU 20 in a manner to be described in more detail later. These instructions are forwarded from the MCDU to a conventional flight management computer (FMC) 24. If the command from the MCDU requires downlinking of data, the flight management computer compiles the appropriate data, places it in the proper format which includes the IMI's/IEI's, and routes the message text to a conventional management unit (MU) 22 through a unique new interface connector 26. The data then is transmitted from the aircraft using a conventional VHF transmitter/receiver 28. In a further exemplary embodiment, (1) the MU 22 is a model # 965-0721-006 manufactured by Sundstrand Corporation of Redmond, Washington, (2) the FMC 24 is a model #10-62044-501-18 manufactured by Smiths Industries of Grand Rapids, Michigan, (3) the VHF transceiver 28 is a model #622-5219-120 manufactured by Collins of Cedar Rapids, Iowa, and (4) the MCDU 20 is a model #10-62094-001 manufactured by Smiths Industries of Grand Rapids, Michigan.

Consequently, the MCDU 20 operates as an FMC controller. The pilot communicates directly with the FMC by means of the MCDU to convey downlink instructions. The FMC interprets these commands, constructs the downlink, and sends it to the MU. The MU then routes the downlink to the proper address (ground station) via the VHF transceiver. Both uplinks and downlinks are transmitted from the FMC to the MU in a protocol format called Williamsbug which is described in ARINC 429 Supplement 12.

Uplinks are sent by the airline host computer and transmitted to the onboard VHF transceiver via a service provider ground station. The MU compiles the VHF transceiver uplink data and determines the intended source. If the intended source is the FMC, the uplink is routed accordingly. The FMC then processes the routed uplink data.

Communications between the airline host computer and the FMC 24 are further accomplished by means of a unique interface control unit 30 which is in the form of unique software program stored in FMC memory and processed by the central processing unit of the Flight Management Computer. A portion of the interface control unit includes tables placed on magnetic disks which are loaded into control unit 30 by means of a conventional airborne data loader such as model #964-0401-015 manufactured by Sundstrand of Redmond, Washington. These tables are loaded into the control unit 30 in the same manner as navigational data base tables are conventionally loaded into the FMC.

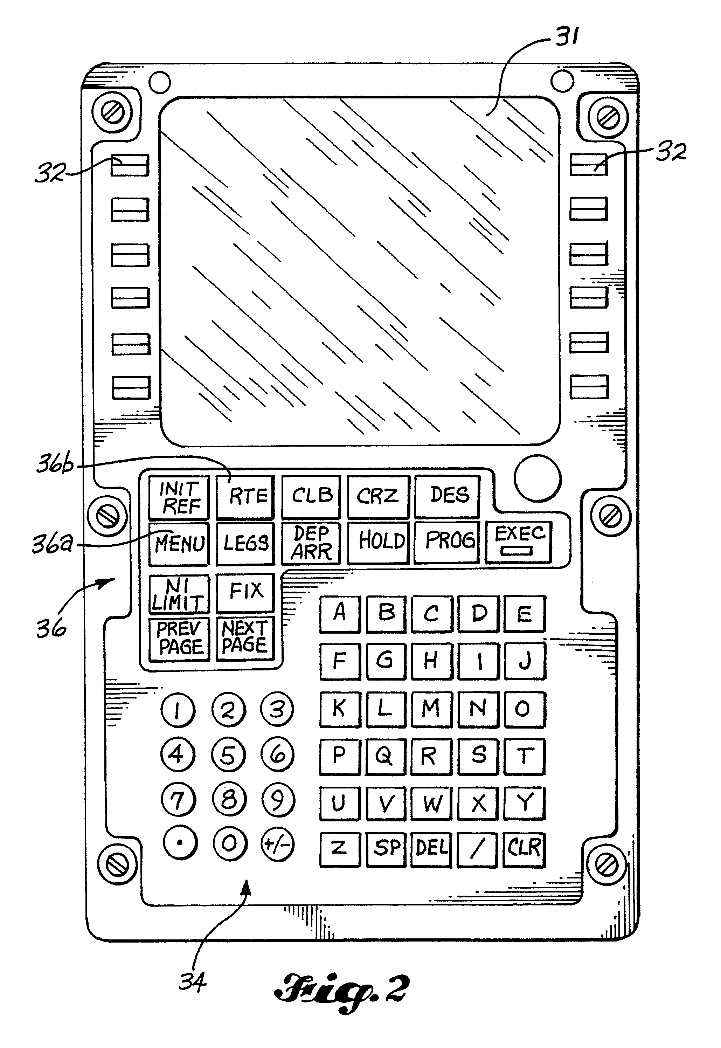

Referring now to FIG. 2, the MCDU 20 is shown in greater detail. MCDU 20 includes a CRT display screen 31 as well as line select keys 32 which are located in vertical columns at left and right sides of the screen 31. Also included is a lower alphanumeric keypad generally indicated at 34 as well as dedicated function keys generally indicated at 36. In order to transmit and receive FMC data, a master menu is displayed by pressing a "Menu" key 36a which results in prompt selections "FMC Mode" and "MU Mode" being displayed on different lines of screen 31. The FMC Mode is selected by pressing the line select key adjacent to the "FMC Mode" display. The pilot then selects the page where the data is located by means of the appropriate function key 36. For example, if the task is to downlink certain route information, the pilot presses "route key" 36b. This causes a "route" page to be displayed which includes a prompt labelled "route report". By pressing the line select key adjacent to the "route report" prompt, information pertaining to the aircraft route is sent from the FMC to the MU via the interface connection 26 (FIG. 1) for downlinking to the ground station. That is, when a route downlink instruction is entered via the MCDU, the FMC gathers the route information, formats the information, and then sends it to the MU which sends the information to the VHF transceiver for transmission to the ground station.

In addition to initiating downlinks by use of the MCDU, communications between the aircraft and a ground station can be initiated (i) by the airline host computer via the ground station or an uplink, or (ii) automatically by the FMC upon the occurrence of a selected trigger event, such as the aircraft reaching a designated waypoint. A further description of these methods for initiating uplinks and downlinks will be described later.

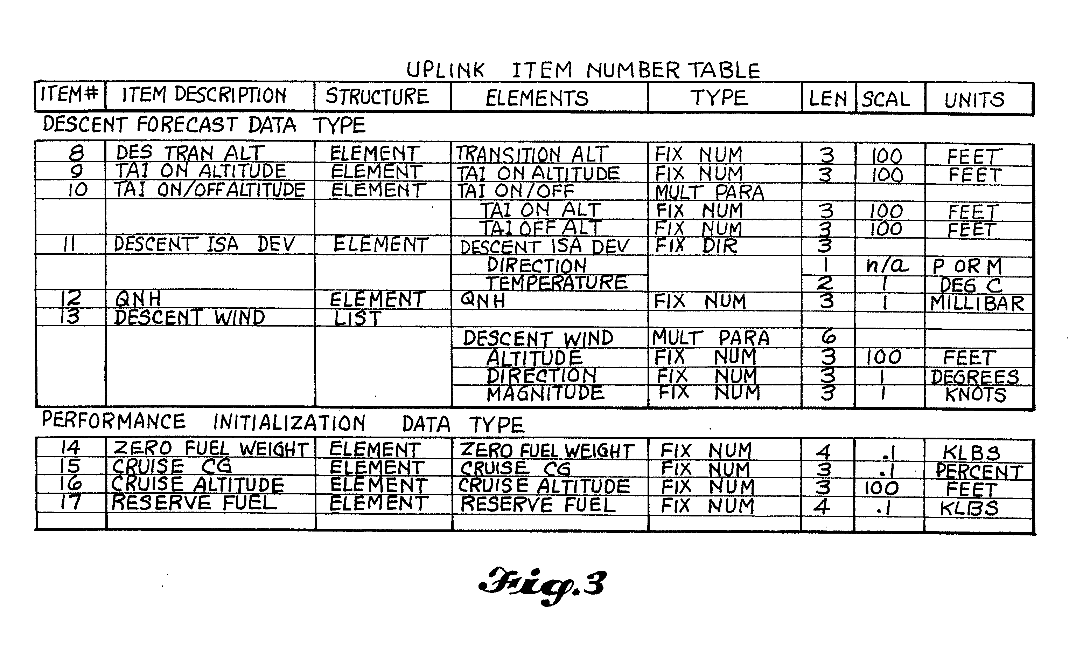

In the present invention, the uplink/downlink message content and downlink conditions (consisting of FMC/ACARS prompts and triggers) are defined by means of lookup tables located in the interface control unit 30. In order to process an uplink message (which is transmitted in ASCII format), an Uplink Item Number Table is "hardcoded" (stored in PROMs) in the FMC memory. A portion of the Uplink Item Number Table is shown in FIG. 3. The Uplink Item Number Table includes information for defining every data type found in the FMC. More specifically, the Uplink Item Number Table is used to (i) identify the data in the uplink message, (ii) convert the data from character code (ASCII) into the type of code used in the FMC (e.g., excess 64 notation), and (iii) provide the instructions for storing the converted uplink message data at the proper locations in FMC memory. For example, item #8 (FIG. 3) pertains to aircraft descent transition altitude data. As indicated by the Uplink Item Number Table, the data is uplinked as a fixed number in (i) units of feet, (ii) a scale of one hundred, and (iii) a length of three characters. This information from the Uplink Item Number Table is used to convert the data into FMC code in a conventional manner where it is stored in FMC memory conventionally.

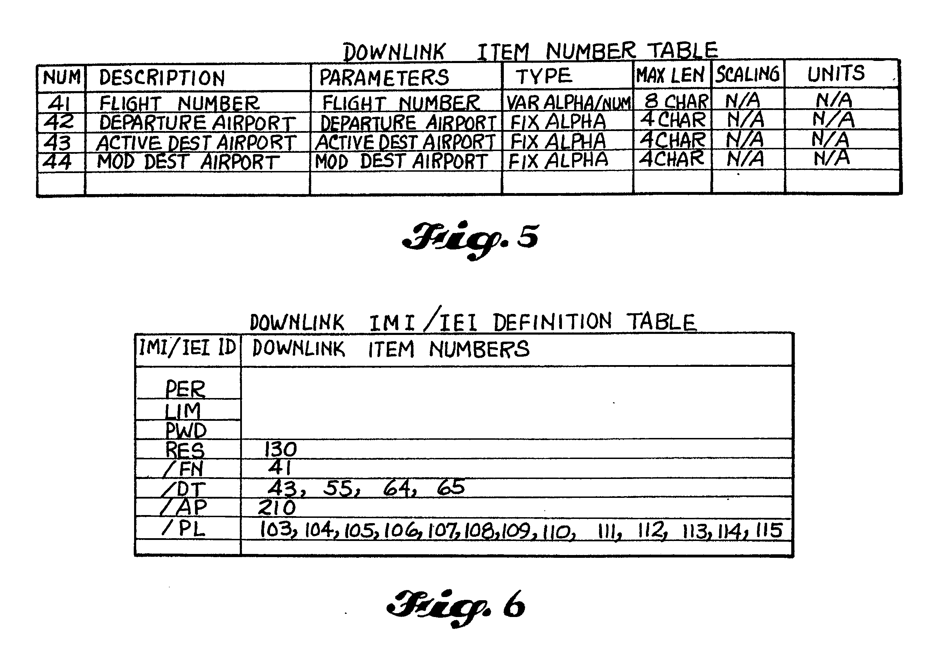

In order to provide the end user with a method of updating and changing the interface, a second loadable table is included to further define the ACARS message data. Referring to FIG. 4, there is shown a portion of an Uplink IMI/IEI Definition Table which determines (i) those IMI/IEI's which are to be used in the end-user's FMC/ACARS system, and (ii) the data items associated with the IMI/IEI's which can be included in the uplink message. The entries in the Uplink IMI/IEI Definition Table are determined by the end-user and loaded into the inferface control unit 30. For example, the following is a typical uplink message: PWD/DW 230, 150, 150 230, P13, 100 230 150 010; 220 120 050; 190 150 030. On receipt of this uplink, the Uplink IMI/IEI Definition Table is scanned until the transmitted IMI ("PWD") is located. In the present example, there are no item numbers located after PWD (FIG. 4). Therefore scanning of the table (FIG. 4) continues until the associated IEI is located. In this example the associated IEI is /DW which is followed by item numbers 8, 9, 10, 11, 12, and 13, which are read sequentially. Since item #8 occupies the first position of the sequence, reference to the Uplink Item Number Table (FIG. 3) indicates that the first data element item of the above uplink message, i.e., the number "230" of the above example, is the Descent Transition Altitude (flight level 230). Using the data (character length, scalar, units, etc.) from the Uplink Item Number Table, the uplink message data is identified, converted into FMC code and stored in FMC memory. Following this, the next data element of the uplink message, i.e., the number "150", is identified by item #9 in the Uplink IMI/IEI Definition Table (FIG. 4). By reference to the Uplink Item Number Table (FIG. 3), this data is identified as the Anti-Ice On Altitude (TAI) . Following conversion and storage of this data in the FMC, the remaining portions of the uplink message which include TAI On/Off Altitude (Item #10), Descent ISA Deviation (Item #11), QNH (Item #12), and Descent Winds (Item #13) are identified, converted to FMC code, and stored at selected locations in the FMC memory.

In the present embodiment, the uplinked data is formatted in accordance with specific criteria. This includes the requirement that the uplinked data be arranged in the sequence set forth in the Uplink IMI/IEI Definition Table (FIG. 4). Furthermore, each data element associated with a particular item number is separated from a different data element by a comma. If the data element is in the form of a list structure (where there is more than one piece of data associated with an item number), each data segment in the list is separated by a semicolon. If data pertaining to one or more item numbers is missing from the uplink, then the space in the uplink is filled by a comma. These uplink/downlink FMC/ACARS message formats are described in further detail in the ARINC 724B document.

In the event the end user desires to expand its uplink capacity by adding additional IMI/IEI's, the selected IMI/IEI's are added into the loadable Uplink IMI/IEI Definition Table (FIG. 4) followed by the selected item numbers. For example, if the end user desires to add the capability to uplink information pertaining to performance initialization, the IEI "/PI" followed by the selected item numbers is added to the loadable Uplink IMI/IEI Definition Table. As shown in FIG. 3, item numbers 14 through 17 reference data in the Uplink Item Number Table for defining four different types of performance initialization data which are available in the FMC. The end user may choose the capability to include one or more of the item numbers relating to performance initialization in the uplink by including the related item numbers after /PI in the loadable IMI/IEI Table (FIG. 4). Likewise, if the end user needs to change an IMI or IEI due to a change in ARINC requirements, it is accomplished by making the appropriate change in the loadable Uplink IMI/IEI Definition Table.

When it is desirable to downlink data from the FMC, this is accomplished by a downlink processing routine to be discussed later. A downlink can be initiated (i) automatically upon the occurrence of a selected trigger event, (ii) by a request contained in an uplink, or (iii) by manual selection of an appropriate downlink prompt at the MCDU. Referring to FIG. 5, there is shown a portion of a Downlink Item Number Table which is used to retrieve the selected data from FMC memory and convert the data into ASCII for transmission to a ground station. For example, item number 41 identifies the current flight number of the aircraft which is stored in the FMC in alphanumerical code (ASCII), which has no scalar or units, and which has a maximum length of eight characters.

In the present embodiment, the Downlink IMI/IEI Definition Table (FIG. 6) is loaded by the end-user. When a request for the downlink "FPN/FN", for example, is initiated either from the ground, or by a trigger event, or by the MCDU, the Downlink IMI/IEI Definition Table (FIG. 6) is scanned until the IMI "FPN" is located. Since this IMI is not followed by an item number in the Table, the Table is further scanned until the IEI "/FN" is located, whereat item #41 (Flight Number) of the Downlink Item Number Table (FIG. 5) is referenced. The Downlink Item Number Table indicates the the flight number is stored in ASCII format (so that no conversion to ASCII is necessary) and it provides the location where the flight number data is located in FMC memory. In this manner, the flight number is retrieved in a conventional manner by the downlink processing routine for transfer to the MU and subsequent downlinking.

Furthermore, for the downlink to be initiated by an uplink message, the uplink must include the IMI "REQ" (FIG. 4) followed by the appropriate downlink IMI's and IEI's. For example, an uplink request for the aircraft's flight number would be as follows: "REQFPN/FN".

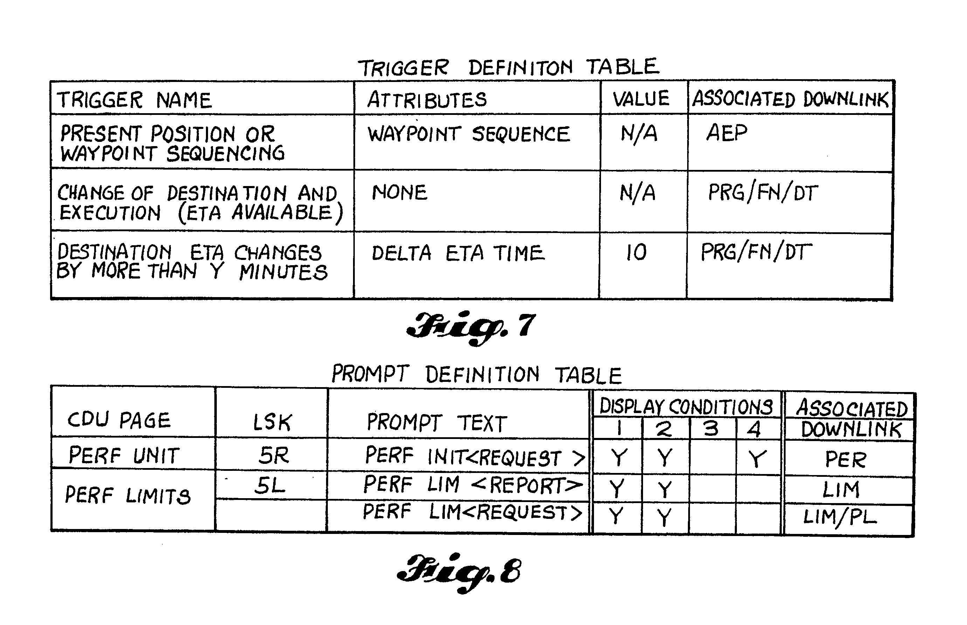

On the other hand, a downlink initiated by an automatic trigger requires a loadable table like the Trigger Definition Table shown in FIG. 7 which defines the conditions under which a trigger is initiated. For example, when a change in the estimated time of arrival to destination is entered into the FMC and the change is greater than a preselected threshold, the conditions for the trigger "Destination ETA changes by more than Y minutes" are met. This results in a downlink "PRG/FN/DT" being automatically generated. In response to the downlink "PRG/FN/DT", the Downlink Item Number Table and the loadable Downlink IMI/IEI Definition Table are read to generate a downlink in the manner described previously, wherein "PRG" is the associated IMI, and "/FN" and "/DT" are the associated IEI's. In the present invention, the Trigger Definition Table in FIG. 7 is loaded by the user who has the option of either inserting a downlink IMI/IEI definition in the table under "Associated Downlink" or disabling the trigger by not entering an Associated Downlink.

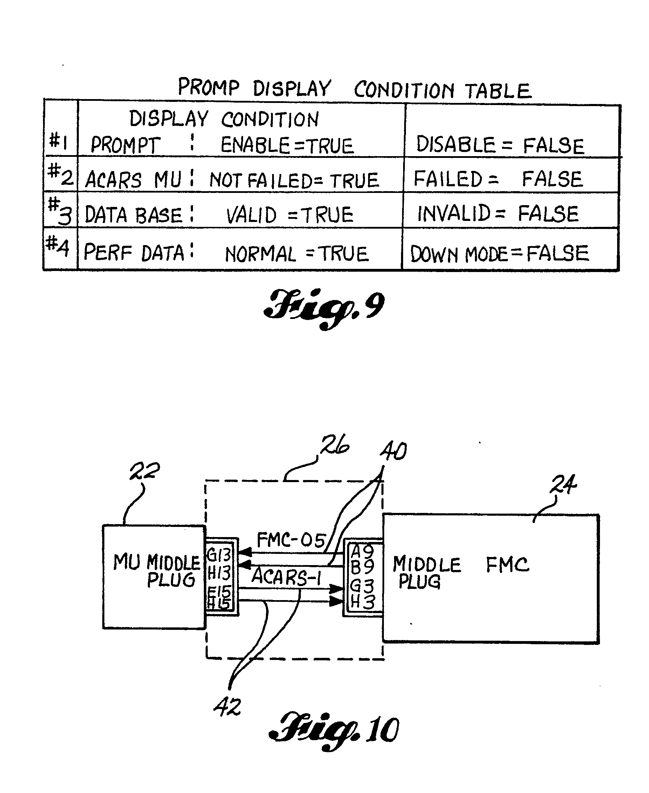

The third method of initiating a downlink is by means of a prompt displayed on the screen of the MCDU. In the present invention, certain lines on the MCDU pages are left intentionally blank for the insertion of user-designated prompts. For example, there is shown in FIG. 8 a portion of a user-loadable Prompt Definition Table which designates (i) the MCDU page on which the prompt may be placed, (ii) the line select key associated with the prompt, (iii) the actual prompt text displayed, (iv) the conditions under which the prompt is to be displayed, and (v) the downlink associated with that prompt. In this table, the end user may define under what conditions the prompt is displayed on the page. For example, in FIG. 9 there is shown a portion of a user loadable Prompt Display Condition Table which sets forth the conditions for displaying a downlink prompt on the MCDU. More specifically, a downlink prompt which requests aircraft performance limits (PERF LIM REQUEST in FIG. 8) is displayed when either display condition #1 or #2 (FIG. 9) is true. More specifically, in accordance with the Prompt Display Condition Table, the downlink prompt is displayed when either the prompt is enabled or the ACARS Management Unit has not failed. The downlink IMI/IEI associated with this prompt is "LIM/PL". The downlink item numbers associated with "LIM/PL" are set forth in the Downlink IMI/IEI Definition Table in FIG. 6. There it is shown that "LIM/PL" is followed by thirteen item numbers which are defined in another portion of the hardcoded Downlink Item Number Table (not shown). It is a user option to change the downlink message by changing the Downlink IMI/IEI Definition Table (FIG. 6) to include other selected item numbers available in the Downlink Item Number Table (FIG. 5).

Having discussed the interface control unit 30 (FIG. 1), attention now will be turned to the interface connector 26 which is shown in more detail in FIG. 10. The interface connector includes a low speed output bus 40 (as defined in the ARINC 429 specification) for outputting data from the FMC to the MU. The output bus 40 is connected between the middle plug pin A9(A) and pin B9(B) of the FMC and middle plug pin G13(A) and pin H13(B) of the MU. Also included in the interface connector is a low speed input bus 42 for inputting data from the MU to the FMC which is connected between the middle plug pin E15(A) and pin H15(B) of the MU and middle plug pin G3(A) and pin H3(B) of the FMC.

With regard to overall operation of the interface control unit, attention now is turned to the flowcharts set forth in FIGS. 11 through 14. As shown in FIG. 11, the process begins by waiting for arrival of an uplink message (block #100). When an uplink is received, the first three characters of the uplink are designated as the IMI (block #102). The IMI is then used to access the Uplink Definition Table to determine what action is to be performed (block #104). Here the FMC determines the "type" of the IMI, such as, for example, "Create a Flight Plan", or "Modify a Flight Plan", or "Insert General Data", or "Downlink a Request". Based on the IMI "type", the FMC performs the appropriate action. Depending on what action was taken, the FMC determines if any item numbers follow the IMI identifier in the IMI/IEI Definition Table. If the required action involves insertion of data into the FMC (Decision block #106), the item numbers associated with the uplink IMI are extracted from the Uplink IMI/IEI Definition Table (Block #110 of FIG. 12). The character data is extracted from the uplink message (block #112) and the associated definition data from the Uplink Item Number Table is used to format the character data segment (block #114). Then the formatted data is inserted into the FMC at the designated addresses (block #116). Following this, the next two characters are designated as the IEI and processed in the manner just described (block #118). Processing continues until the end of text message is encountered (decision block #120).

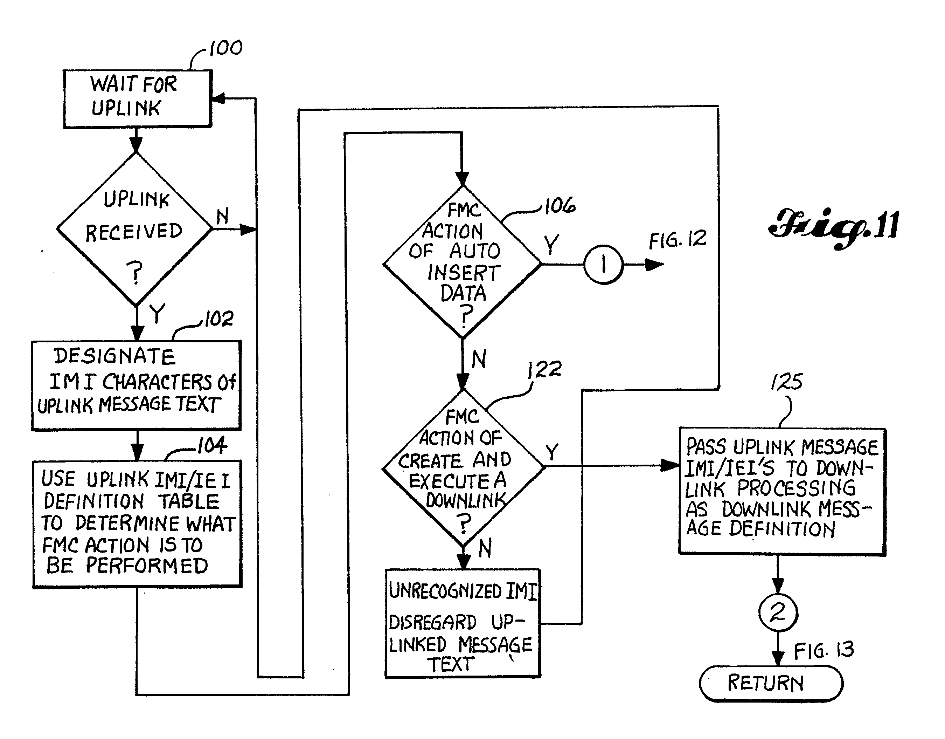

Returning to FIG. 11, if the action required is to create a downlink as a result of an uplink request, then the uplink IMI/IEI definition is passed to downlink processing as the downlink message definition (block #125). Subsequently, the associated IMI/IEI is assigned to the downlink message text (block #126 in FIG. 13) and the associated item numbers are read from the Downlink IMI/IEI Definition Table (block #128). Using the referenced item numbers, the Downlink Item Number Table is used to extract the relevant data from FMC memory (block #129) and convert the FMC data into character format (block #130). The formatted data then is inserted into the downlink message text (block #132).

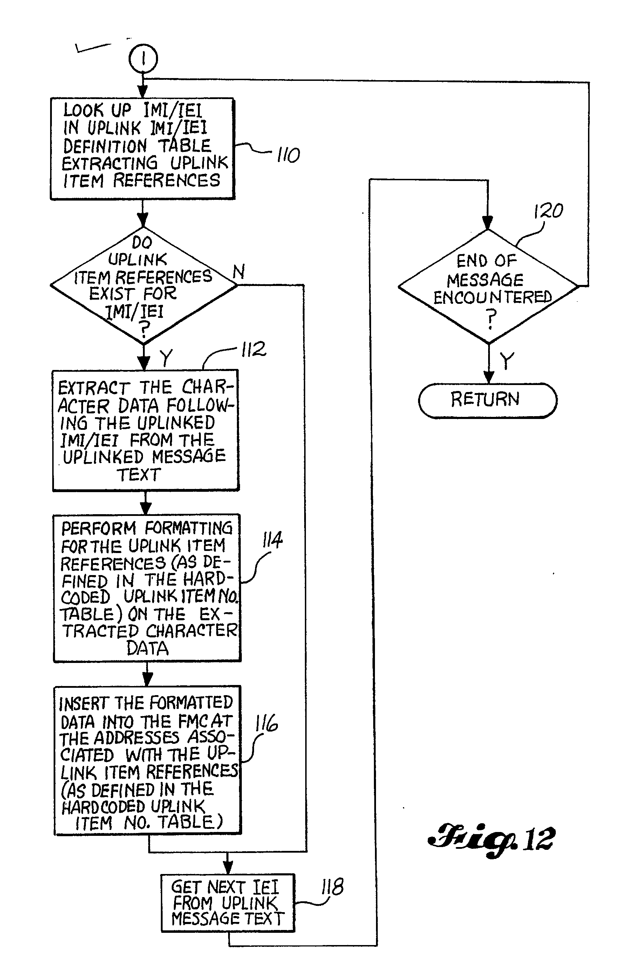

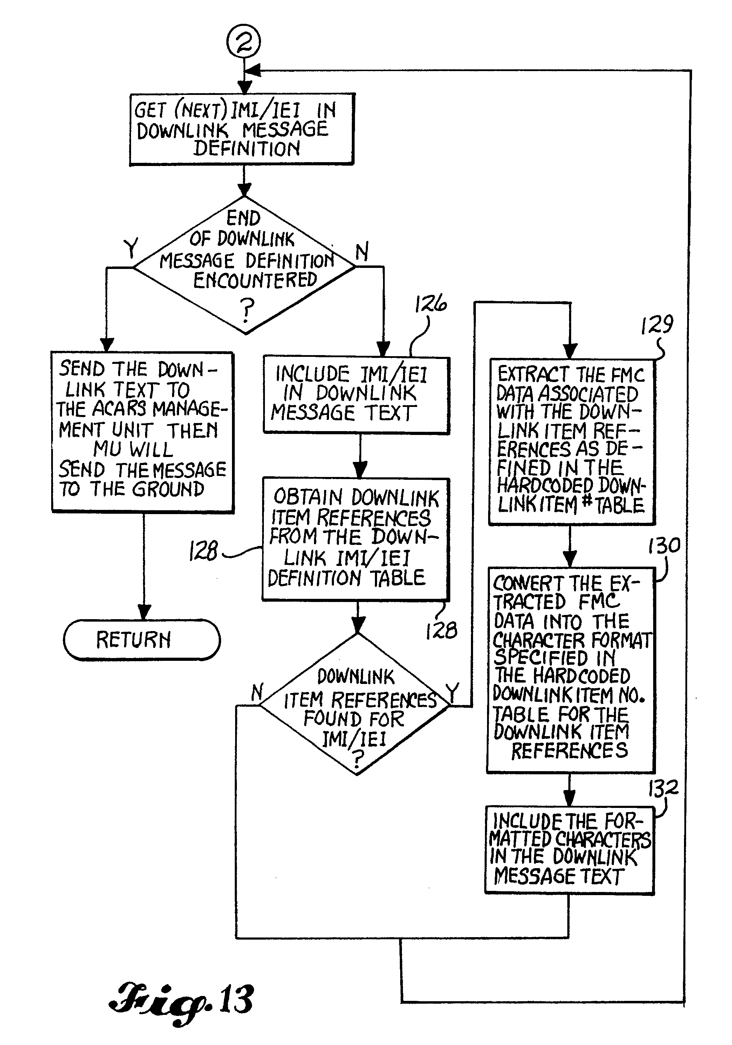

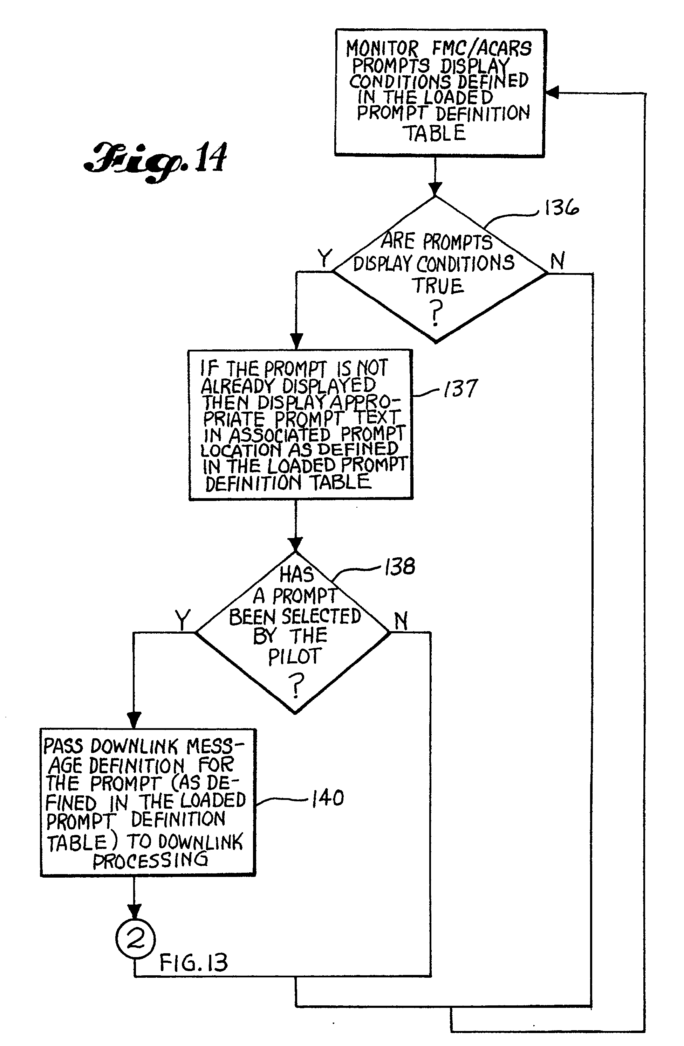

In response to a downlink instruction originated by an MCDU prompt (decision block #135 in FIG. 14) and when the conditions set forth in the Prompt Definition Table are determined to be true (decision block #136), the associated prompt is displayed (block #137). When this prompt is selected by the pilot (decision block #138), the downlink message associated with the prompt is formatted for downlinking (block #140) in the manner described in FIG. 13.

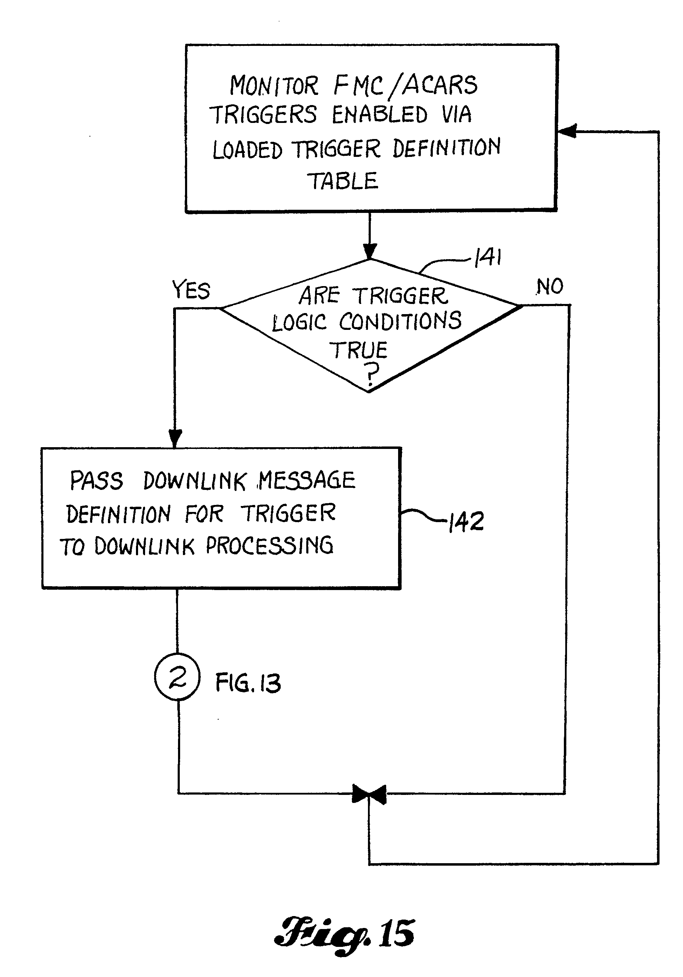

In response to a downlink instruction generated by an enabled FMC/ACARS trigger event (decision block #141 in FIG. 15), the downlink message definition associated with the enabled trigger is formatted for downlinking (block #142) in the manner described in FIG. 13.

## Claims

1. An aircraft system for communicating with a host computer via a ground communication station, the aircraft system comprising:

    a. means for transmitting an information message to and receiving an information message from the host computer via the ground communication station in an information message format which includes an identifier portion and a data portion;

    b. means for storing and processing data which is in a processing format;

    c. means for storing a first table containing data for converting the data portion of the information message between the information message format and the processing format in a manner that separate portions of the conversion data in the first table include respective conversion data identifiers;

    d. means for storing a second table containing a list of (i) information message identifiers and (ii) conversion data identifiers that are associated with each information message identifier;

    e. means for reading the second table, in response to the identifier portion of the information message, to determine the conversion data identifier that is associated with the identifier portion of the information message; and

    f. means for retrieving the conversion data from the first table that is associated with the conversion data identifier that was read from the second table so as to use the retrieved conversion data for converting the data portion of the information message between the information message format and the processing format.

2. The aircraft system as set forth in claim 1 wherein the second table storing means includes means for modifying the information message identifiers and the conversion data identifiers in the second table so that the data portion of the information message may be changed without changing the conversion data in the first table.

3. The aircraft system as set forth in claim 1 wherein the second table storing means includes means for modifying the information message identifiers and the conversion data identifiers in the second table so as to change the conversion data associated with an identifier without changing the conversion data.

4. The aircraft system as set forth in claim 1 wherein the second table storing means includes means for responding to information messages containing new identifier portions by inserting information message identifiers and associated conversion data identifiers which correspond to the new identifier portions and without modifying the conversion data in the first table.

5. The aircraft system as set forth in claim 1 wherein the second table storing means includes means for deleting information message identifiers and associated conversion data identifiers from the second table without modifying the conversion data in the first table.

6. The aircraft system as set forth in claim 1 additionally comprising means for initiating transmission of the information message from the aircraft to the ground station in response to a request contained in an information message from the ground station to the aircraft in a manner that the information message from the ground station includes the identifier portion of the requested data. 7. The aircraft system as set forth in claim 1 additionally comprising:

a. means for visually displaying data from the processing and storing means and for displaying prompts for transmitting the information message to the ground station; and

b. keypad means for manually initiating transmission of the information message in response to observing the prompt.

*Fig.1*

## UPLINK IMI/IEI DEFINITION TABLE

| IMI/IEI ID | UPLINK ITEM NUMBERS |
|---|---|
| FPR | |
| PWD | |
| PER | |
| LIM | |
| REQ | |
| /ER | |
| /EM | 7 |
| /FN | 5 |
| /DW | 8, 9, 10, 11, 12, 13 |
| /PL | 14, 15, 16, 17, 18, 19, 20, 21, 22, 23, 24 |
| /PL | 33, 34, 35, 36, 37, 38, 39, 40, 41, 42, 43, 44, 45 |
| | |

*Fig.4*

*Fig.2*

# UPLINK ITEM NUMBER TABLE

| ITEM# | ITEM DESCRIPTION | STRUCTURE | ELEMENTS | TYPE | LEN | SCAL | UNITS |
|---|---|---|---|---|---|---|---|
| DESCENT FORECAST DATA TYPE | | | | | | | |
| 8 | DES TRAN ALT | ELEMENT | TRANSITION ALT | FIX NUM | 3 | 100 | FEET |
| 9 | TAI ON ALTITUDE | ELEMENT | TAI ON ALTITUDE | FIX NUM | 3 | 100 | FEET |
| 10 | TAI ON/OFF ALTITUDE | ELEMENT | TAI ON/OFF | MULT PARA | | | |
| | | | TAI ON ALT | FIX NUM | 3 | 100 | FEET |
| | | | TAI OFF ALT | FIX NUM | 3 | 100 | FEET |
| 11 | DESCENT ISA DEV | ELEMENT | DESCENT ISA DEV | FIX DIR | 3 | | |
| | | | DIRECTION | | 1 | n/a | P OR M |
| | | | TEMPERATURE | | 2 | 1 | DEG C |
| 12 | QNH | ELEMENT | QNH | FIX NUM | 3 | 1 | MILLIBAR |
| 13 | DESCENT WIND | LIST | | | | | |
| | | | DESCENT WIND | MULT PARA | 6 | | |
| | | | ALTITUDE | FIX NUM | 3 | 100 | FEET |
| | | | DIRECTION | FIX NUM | 3 | 1 | DEGREES |
| | | | MAGNITUDE | FIX NUM | 3 | 1 | KNOTS |
| PERFORMANCE INITIALIZATION DATA TYPE | | | | | | | |
| 14 | ZERO FUEL WEIGHT | ELEMENT | ZERO FUEL WEIGHT | FIX NUM | 4 | .1 | KLBS |
| 15 | CRUISE CG | ELEMENT | CRUISE CG | FIX NUM | 3 | .1 | PERCENT |
| 16 | CRUISE ALTITUDE | ELEMENT | CRUISE ALTITUDE | FIX NUM | 3 | 100 | FEET |
| 17 | RESERVE FUEL | ELEMENT | RESERVE FUEL | FIX NUM | 4 | .1 | KLBS |
| | | | | | | | |

## Fig.3

EP 0 451 897 A2

DOWNLINK ITEM NUMBER TABLE

| NUM | DESCRIPTION | PARAMETERS | TYPE | MAX LEN | SCALING | UNITS |
|---|---|---|---|---|---|---|
| 41 | FLIGHT NUMBER | FLIGHT NUMBER | VAR ALPHA/NUM | 8 CHAR | N/A | N/A |
| 42 | DEPARTURE AIRPORT | DEPARTURE AIRPORT | FIX ALPHA | 4 CHAR | N/A | N/A |
| 43 | ACTIVE DEST AIRPORT | ACTIVE DEST AIRPORT | FIX ALPHA | 4 CHAR | N/A | N/A |
| 44 | MOD DEST AIRPORT | MOD DEST AIRPORT | FIX ALPHA | 4 CHAR | N/A | N/A |
|  |  |  |  |  |  |  |

*Fig.* 5

DOWNLINK IMI/IEI DEFINITION TABLE

| IMI/IEI ID | DOWNLINK ITEM NUMBERS |
|---|---|
| PER |  |
| LIM |  |
| PWD |  |
| RES | 130 |
| /FN | 41 |
| /DT | 43, 55, 64, 65 |
| /AP | 210 |
| /PL | 103, 104, 105, 106, 107, 108, 109, 110, 111, 112, 113, 114, 115 |

*Fig.* 6

EP 0 451 897 A2

## TRIGGER DEFINITON TABLE

| TRIGGER NAME | ATTRIBUTES | VALUE | ASSOCIATED DOWNLINK |
|---|---|---|---|
| PRESENT POSITION OR WAYPOINT SEQUENCING | WAYPOINT SEQUENCE | N/A | AEP |
| CHANGE OF DESTINATION AND EXECUTION (ETA AVAILABLE) | NONE | N/A | PRG/FN/DT |
| DESTINATION ETA CHANGES BY MORE THAN Y MINUTES | DELTA ETA TIME | 10 | PRG/FN/DT |

*Fig. 7*

## PROMPT DEFINITION TABLE

| CDU PAGE | LSK | PROMPT TEXT | DISPLAY CONDITIONS | | | | ASSOCIATED DOWNLINK |
|---|---|---|---|---|---|---|---|
| | | | 1 | 2 | 3 | 4 | |
| PERF UNIT | 5R | PERF INIT<REQUEST > | Y | Y | | Y | PER |
| PERF LIMITS | 5L | PERF LIM <REPORT> | Y | Y | | | LIM |
| | | PERF LIM<REQUEST> | Y | Y | | | LIM/PL |

*Fig. 8*

EP 0 451 897 A2

PROMP DISPLAY CONDITION TABLE

|  | DISPLAY CONDITION | | |
|---|---|---|---|
| #1 | PROMPT : | ENABLE = TRUE | DISABLE = FALSE |
| #2 | ACARS MU : | NOT FAILED = TRUE | FAILED = FALSE |
| #3 | DATA BASE : | VALID = TRUE | INVALID = FALSE |
| #4 | PERF DATA : | NORMAL = TRUE | DOWN MODE = FALSE |

*Fig.9*

*Fig.10*

Fig. 11

```
                              ( I )
                               │
              ┌────────────────▼──────────────┐
              │ LOOK UP IMI/IEI               │
              │ IN UPLINK IMI/IEI             │
              │ DEFINITION TABLE       ──── 110
              │ EXTRACTING UPLINK             │
              │ ITEM REFERENCES               │
              └────────────────┬──────────────┘
                               │
                          ◇ DO          ◇
                      UPLINK
                   ITEM REFERENCES    N
                      EXIST FOR  ─────────────┐
                       IMI/IEI               │
                          ?                   │
                        │ Y  ──── 112         │
              ┌─────────▼─────────┐           │
              │ EXTRACT THE CHAR- │           │
              │ ACTER DATA FOLLOW-│           │
              │ ING THE UPLINKED  │           │
              │ IMI/IEI FROM THE  │           │
              │ UPLINKED MESSAGE  │           │
              │ TEXT              │           │
              └─────────┬─────────┘           │
                        │                     │
              ┌─────────▼─────────┐           │
              │ PERFORM FORMATTING│           │
              │ FOR THE UPLINK ITEM           │
              │ REFERENCES (AS DE- ──── 114    │
              │ FINED IN THE HARD-│           │
              │ CODED UPLINK ITEM NO.         │
              │ TABLE) ON THE EX- │           │
              │ TRACTED CHARACTER │           │
              │ DATA              │           │
              └─────────┬─────────┘           │
                        │                     │
              ┌─────────▼─────────┐           │
              │ INSERT THE FORMATTED          │
              │ DATA INTO THE FMC AT ─── 116   │
              │ THE ADDRESSES ASSO-│          │
              │ CIATED WITH THE UP-│          │
              │ LINK ITEM REFERENCES          │
              │ (AS DEFINED IN THE │          │
              │ HARDCODED UPLINK   │          │
              │ ITEM NO. TABLE)    │          │
              └─────────┬─────────┘           │
                        │                     │
              ┌─────────▼─────────┐           │
              │ GET NEXT IEI  ──── 118         │
              │ FROM UPLINK       │           │
              │ MESSAGE TEXT      │           │
              └─────────┬─────────┘           │
```

END OF MESSAGE ENCOUNTERED ? ──── 120

RETURN

*Fig.* 12

GET (NEXT) IMI/IEI IN DOWNLINK MESSAGE DEFINITION

END OF DOWNLINK MESSAGE DEFINITION ENCOUNTERED ?

Y → SEND THE DOWN-LINK TEXT TO THE ACARS MANAGEMENT UNIT THEN MU WILL SEND THE MESSAGE TO THE GROUND → RETURN

N → INCLUDE IMI/IEI IN DOWNLINK MESSAGE TEXT  126

OBTAIN DOWNLINK ITEM REFERENCES FROM THE DOWNLINK IMI/IEI DEFINITION TABLE  128

128 DOWNLINK ITEM REFERENCES FOUND FOR IMI/IEI ?

N

Y → EXTRACT THE FMC DATA ASSOCIATED WITH THE DOWNLINK ITEM REFERENCES AS DEFINED IN THE HARDCODED DOWNLINK ITEM # TABLE  129

CONVERT THE EXTRACTED FMC DATA INTO THE CHARACTER FORMAT SPECIFIED IN THE HARDCODED DOWNLINK ITEM NO. TABLE FOR THE DOWNLINK ITEM REFERENCES  130

INCLUDE THE FORMATTED CHARACTERS IN THE DOWNLINK MESSAGE TEXT  132

Fig. 13

17

*Fig.*14

MONITOR FMC/ACARS
PROMPTS DISPLAY
CONDITIONS DEFINED
IN THE LOADED
PROMPT DEFINITION
TABLE

ARE PROMPTS
DISPLAY CONDITIONS
TRUE
? — 136

Y        N

IF THE PROMPT IS NOT
ALREADY DISPLAYED
THEN DISPLAY APPRO-
PRIATE PROMPT TEXT
IN ASSOCIATED PROMPT
LOCATION AS DEFINED
IN THE LOADED PROMPT
DEFINITION TABLE — 137

HAS
A PROMPT
BEEN SELECTED
BY THE
PILOT
? — 138

Y        N

PASS DOWNLINK MESS-
AGE DEFINITION FOR
THE PROMPT (AS DE-
FINED IN THE LOADED
PROMPT DEFINITION
TABLE) TO DOWNLINK
PROCESSING — 140

②
FIG. 13

MONITOR FMC/ACARS
TRIGGERS ENABLED VIA
LOADED TRIGGER DEFINITION
TABLE

ARE TRIGGER
LOGIC CONDITIONS
TRUE
?

YES

NO

141

PASS DOWNLINK MESSAGE
DEFINITION FOR TRIGGER
TO DOWNLINK PROCESSING

142

2  FIG.13

Fig.15